Europäisches Patentamt

European Patent Office

Office européen des brevets

(11) Publication number: **0 179 611 B1**

# (12) EUROPEAN PATENT SPECIFICATION

(45) Date of publication of patent specification: **11.09.91**

(51) Int. Cl.5: **G01L 23/24**, G01L 9/08, G01L 23/10

(21) Application number: **85307444.1**

(22) Date of filing: **16.10.85**

(54) Cylinder pressure transmitter for an internal combustion engine.

(30) Priority: **26.10.84 US 665237**
**26.10.84 US 665340**
**26.10.84 US 665426**
**26.10.84 US 665490**

(43) Date of publication of application:
**30.04.86 Bulletin 86/18**

(45) Publication of the grant of the patent:
**11.09.91 Bulletin 91/37**

(84) Designated Contracting States:
**DE FR GB IT NL SE**

(56) References cited:
**EP-A- 0 040 390**
**DE-A- 1 924 623**
**DE-A- 2 538 381**
**GB-A- 2 022 261**

**TECHNICA 1980, no. 24, pages 2223-2239;
K.H. MARTINI: "Piezoelektrische und
piezoresistive Druckmessverfahren"**

(73) Proprietor: **TEXAS INSTRUMENTS INCORPO-
RATED**
**13500 North Central Expressway**
**Dallas Texas 75265(US)**

(72) Inventor: **Paganelli, Jude V.**
**1172 6th Street**
**Albany California, 94710(US)**
Inventor: **Pundarika, Eshwarahalli S.**
**Apt. 23, 1010 Massachusetts Avenue**
**Cambridge, MA 02139(US)**
Inventor: **Shukla, Vishwa**
**40 Sumac Lane**
**North Attleboro, MA 02760(US)**
Inventor: **Padovani, Francois A.**
**60 Reservoir Road**
**Westwood, MA 02090(US)**
Inventor: **Cooper, Lawrence**
**51 Thayer Farms Road**
**Attleboro, MA 02703(US)**

(74) Representative: **Abbott, David John et al**
**Abel & Imray Northumberland House 303-306**
**High Holborn**
**London, WC1V 7LH(GB)**

## Description

### Background of the Invention

The field of this invention is that of pressure sensors and the invention relates more particularly to a cylinder pressure transmitter responsive to variations in pressure within a cylinder of an internal combustion engine to provide control signals for use in regulating engine operation.

In commonly assigned, copending European Patent Application 84308593.7, cylinder pressure transmitters are shown to comprise a body mounting pressure responsive piezoelectric means in sealed relation to an engine cylinder to be responsive to variations in cylinder pressure during engine operation to provide initial electrical signals representative of pressure variations in the cylinder. Those transmitters include metal diaphragms which shield the piezoelectric means from the cylinder environments while transmitting pressure forces from the cylinders to the piezoelectric means for generating the desired pressure responsive signals. High temperature electronic means are carried and electromagnetically shielded on the mounting body of the device for amplifying the signals provided by the piezoelectric means to provide low impedance signals for transmission to computer control or other signal processing means at a location remote from the engine cylinder for regulating engine operation to improve performance. However, such cylinder pressure transmitters are somewhat difficult to manufacture at low cost with uniform properties and high reliability and the piezoelectric means tend to be subjected to undesirably high temperatures due to heat-transfer from the engine cylinder environment through the diaphragm. The transmitters are also subjected to heavy vibrations during use so that electrical connection reliability is of concern.

In GB-A-2,022,261 there is disclosed a piezoelectric pressure transducer in which the piezoelectric crystal is bonded to a pressure plate which contacts a metal diaphragm exposed to the medium having the pressure to be measured. The diaphragm has an annular corrugation around the region contacting the pressure plate to accommodate the deflection of the diaphragm in response to changes of pressure.

DE-A-1,924,623 discloses a liquid-cooled, piezoelectric pressure transducer in which the piezoelectric crystal is in direct contact with the inner surface of a cup-shaped membrane isolating the crystal from the medium under pressure. The membrane is mounted with its rim against a shoulder on the housing containing the crystal.

In EP-A-0,040,390 there is described a pressure sensor device with a piezoelectric element on a mounting which is flexed in response to pressure changes on a diaphragm coupled by a plunger to the mounting. The mounting is screwed into the housing of the device so as to enable the prestress force on the plunger to be adjusted.

### Brief Summary of the Invention

It is an object of this invention to provide a novel and improved cylinder pressure transmitter; to provide such a pressure transmitter which is adapted to be manufactured with improved economy, uniformity and reliability; and to provide such a pressure transmitter which is better adapted to withstand the severe operating temperatures and Vibration conditions likely to be encountered in an internal combustion engine environment.

According to one aspect of the present invention there is provided a device for providing an electrical signal corresponding to the pressure in a cylinder of an internal combustion engine during the normal running operation of the engine, comprising:

piezoelectric means for providing an electrical signal in response to the application of pressure to the device, and

means for mounting the piezoelectric means so that it can be attached to a cylinder of an engine so as to be responsive to the pressure therein,

the mounting means including a metal body having a chamber, opening to one end of the body, accommodating the piezoelectric means therein and having a cylindrical body rim portion at said one end of the body around the opening of the chamber, means for attaching the body to the engine so that the one end communicates with the inside of a cylinder, a cup-shaped metal diaphragm member with a flexible cup bottom and a cup side wall fitted over the body rim portion so as to close the opening of the chamber and welded to the body, and a rigid force transmitting means extending between the diaphragm member and the piezoelectric means,

CHARACTERISED IN THAT

the piezoelectric means is mounted on a fixed, rigid abutment on the body and is pressed against the abutment by the force transmitting means, and

the diaphragm member is welded around the body rim portion with the rim of the diaphragm member located part way along the body rim portion and the flexible cup bottom of the diaphragm member spaced from the body rim portion in such a position that when the device is not in use the diaphragm applies a predetermined pre-load compressive force to the piezoelectric means through the force transmitting means.

According to a second aspect of the present invention there is provided a method of providing a desired preload force on a piezoelectric pressure responsive element in a pressure transducing device suitable for attachment to a cylinder of an internal combustion engine in order to monitor the pressure therein, the device having an open-ended hollow body containing the piezoelectric element and a rigid force transmitting member extending from a flexible diaphragm closing the open end of the body to the piezoelectric element, the open end of the body being in the form of a tube and the diaphragm being cup-shaped with a cylindrical side wall which fits the end of the body,

**characterised in that** initially the diaphragm is axially slidable on the body end, and in that the method includes subjecting the diaphragm to a force corresponding to the desired preload force so as axially to displace the diaphragm on the body end and then welding the diaphragm to the body end in the position to which it has been displaced.

In one example, the novel and improved cylinder pressure transmitter of this invention comprises piezoelectric means adapted to provide an electrical signal in response to application of pressure. Means mount the piezoelectric means to be responsive to pressures in a cylinder of an internal combustion engine during normal running operation of the engine for providing electrical signals corresponding to the cylinder pressures. The mounting means include a metal body having a chamber opening at one end of the body and the piezoelectric means are accommodated in the body chamber. Screw threads or the like are provided on the body near one end of the body for sealing the body end in an engine well communicating with the engine cylinder. Diaphragm means are secured to the body over the chamber opening, preferably to be flush with an end wall of the cylinder. The diaphragm means are responsive to variations in cylinder pressure for transferring pressure forces to the piezoelectric means to provide initial electrical signals corresponding to the cylinder pressures. The diaphragm means also shield the piezoelectric means from the high temperature, gaseous engine cylinder environment. Electronic means are preferably carried and electromagnetically shielded on the mounting means to amplify the initial electrical signals for transmission to a location remote from the engine cylinder.

The metal body has a neck portion which is of reduced diameter relative to the screw threads forming a rim around the chamber opening at the end of the body just ahead of the screw threads. The diaphragm means includes a cup-shaped metal member having a side-wall which is fitted around the reduced-diameter, neck-portion of the body. The side wall is welded to the body entirely around the reduced diameter body portion for sealing the member to the body while disposing the bottom of the cup-shaped member to extend across the body opening to serve as a diaphragm responsive to cylinder pressure variations. Preferably force transmitting means of selected materials, surface areas and crosssectional configurations are disposed in the body chamber between the diaphragm member and the piezoelectric means and the bottom of the cup-shaped member bears against the force transmitting means to apply a selected preload compressive force to the piezoelectric means, the sidewall of the cup-shaped member being welded to the neck portion of the body to maintain the desired preload force. Preferably the diaphragm member is attached to the body with a precise laser weld. In one preferred embodiment, the force transmitting means has a surface portion of selected radius at one end engaging a selected area of the center of the bottom of the cup-shaped diaphragm member and the compressive force of that member bearing against that radiused surface provides the member bottom with a slightly domed or parabolic configuration which is accurately responsive to engine cylinder pressure variations to transfer corresponding forces to the piezoelectric means.

In one preferred embodiment, the force transmitting means includes one force spreading component and another component of material of relatively low thermal conductivity. Preferably for example a first rigid force spreading transfer means of metal has a portion of a reduced cross sectional area and a second rigid force transfer means is of a ceramic material or the like of relatively low thermal conductivity. The two force transfer means are arranged in sequence in the body chamber between the diaphragm and the piezoelectric means to cooperate in transferring forces from the diaphragm to the piezoelectric means to provide output signals accurately corresponding to cylinder pressures while also retarding transfer of heat from the engine cylinder to the piezoelectric means through the diaphragm.

In one preferred embodiment, the rigid metal force transfer means comprises a spherical metal ball and the low thermal conductivity force transfer means has a socket-like surface with a configuration of a segment of a sphere rotatably engaged with the ball to facilitate transfer of forces applied to the diaphragm from the diaphragm to the piezoelectric means while providing improved retarding of heat-transfer to the piezoelectric means.

In another preferred embodiment, the metal force transfer means comprises a metal tube having one end engaged with the diaphragm and the second force transfer means comprises a ceramic disc resting on an opposite end of the tube. The tube is substantially limited in crosssectional area for retarding heat transfer while still providing desired strength and rigidity for force transfer purposes. Preferably substantial portions of the force transfer means are spaced from the metal body within the body chamber and the screw thread means are located so they tend to transfer heat from the body to the engine to dissipate heat from the diaphragm before such heat is transferred through the body to the piezoelectric means. In one embodiment, thermally conductive metal means are arranged between the metal tube and the ceramic disc so that heat which is transferred along the tube is shunted away from the ceramic disc to the mounting body to further retard heat-transfer to the piezoelectric means.

In a preferred embodiment, conductor means extend from the piezoelectric means to connect to first contact means having a selected location on the mounting body. Electronic means are then positioned on an insulating ceramic substrate or the like and the substrate is mounted on a separate housing, preferably on a rigid support in such a housing. Second contact means are located on the substrate. The housing and the mounting body are provided with locating and guide surfaces which cooperate as the housing is assembled with the mounting body for automatically bringing the first and second contact means into a secure electrical engagement which is adapted to be reliably maintained even when the pressure transmitter device is subjected to severe vibrations. Means secure the housing and mounting body together with the contact means in the desired assembled relation.

## Description of the Drawings

Other objects, advantages and details of the novel and improved cylinder pressure transmitter of this invention appear in the following detailed description of preferred embodiments of the invention, the detailed description referring to the drawings in which:

Fig. 1 is a perspective view of the cylinder pressure transmitter;

Fig. 2 is a section view to enlarged scale along line 2-2 of Fig. 1;

Fig. 3 is a partial section view to greatly enlarged scale similar to Fig. 2 illustrating the diaphragm means of the cylinder pressure transmitter;

Fig. 4 is a section view similar to Fig. 2 illustrating an alternate preferred embodiment of the cylinder pressure transmitter;

Fig. 5 is a section view similar to Fig. 2 of an alternate preferred embodiment of the cylinder pressure transmitter;

Fig. 6 is a section view similar to Fig. 2 of another alternate preferred embodiment of the pressure transmitter;

Figs. 7-8 are partial section views similar to Fig. 2 illustrating other alternate preferred embodiments of the invention.

## Description of the Preferred Embodiments

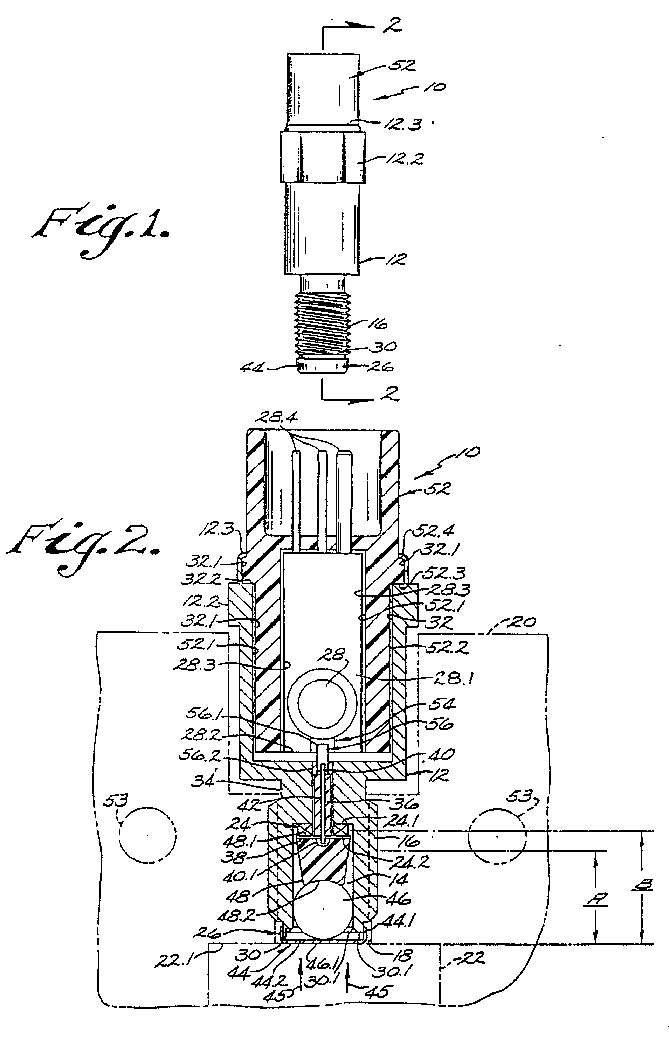

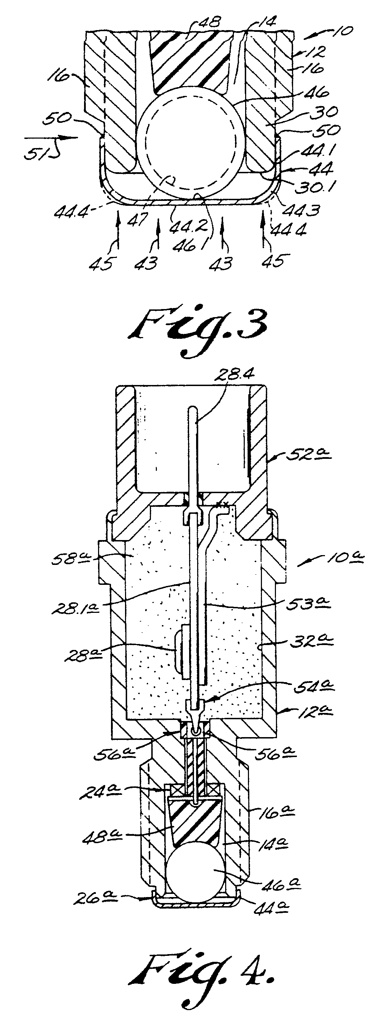

Referring to the drawings, 10 in Figs. 1-3 indicates a novel and improved cylinder pressure transmitter of this invention which is shown to include a metal body 12 of cold rolled steel or the like preferably having the general size and configuration of a small spark plug. The body has a chamber 14 opening at one end 12.1 of the body (see Fig. 2) and sealing means such as screw threads 16 are provided near that end of the body for mounting the device 10 in sealed relation within a well 18 in an internal combustion engine 20 to face the opening of the chamber 14 toward the engine to present it to the pressure environment within a piston cylinder 22 in the engine. Piezoelectric means 24 responsive to the application of pressure for generating an electrical signal are accommodated in the body chamber 14 and diaphragm means 26 are arranged over the chamber opening to be responsive to pressure changes in the cylinder to transmit pressure forces to the piezoelectric means to generate electrical signals corresponding to the cylinder pressures. Preferably the outer surface of the diaphragm means is generally flush with the cylinder end wall 22.1 as illustrated in Fig. 2. Electronic means 28 are mounted and preferably electromagnetically shielded on the metal mounting body 12 to amplify the initial electrical signals provided by the piezoelectric means for transmission to computer control means or the like (not shown) at a location remote from the cylinder.

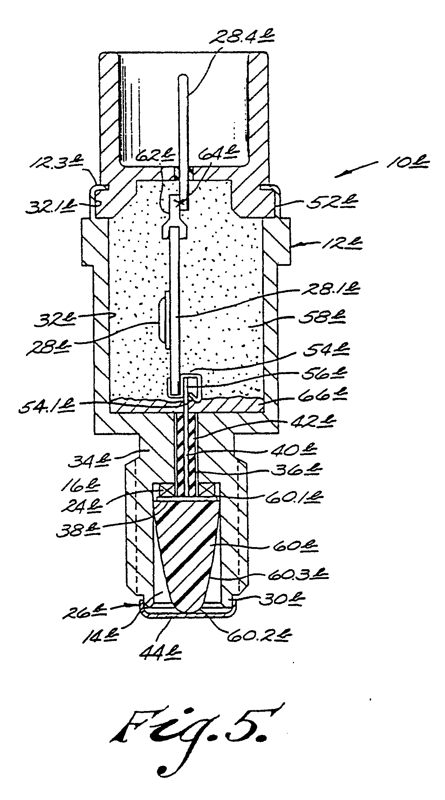

As shown in Fig 2, the metal body 12 has a neck portion 30 formed as a rim around the opening in the chamber 14. The neck portion is of reduced diameter relative to the screw thread 16 for easy insertion into the engine well 18 and preferably the neck portion has a radiused edge 30.1 (see Fig. 3). Preferably the body 12 has another chamber 32 opening at the opposite body end and a support section 34 is located between the chambers with a passage 36 extending through the support section. Preferably an exterior body portion 12.2 is hexagonal to meet the standards established by the Society of Automotive Engineers to facilitate threaded mounting of the device on the engine.

The piezoelectric means 24 preferably comprises an apertured disc or donut of a material such as a ceramic lead zirconium titanate or lead metaniobate or the like having a conventional conductive charge-collecting coating of silver or the like (not shown) on opposite sides 24.1, 24.2 of the disc. Preferably the disc material has Curie tem-

perature above about 175°C. One side 24.1 of the disc bears against the support section 34 and an electrode 38 such as an apertured stainless steel plate or the like bears against the opposite side 24.2 so the electrode and support section electrically engage the respective opposite disc sides. A conductor rod or wire 40 is welded, soldered or otherwise connected to the electrode as at 40.1 and typically extends through the disc and plate apertures and the passage 36 toward the chamber 32 as shown in Fig. 2. Alternately the electrode is not apertured and one end of the conductor 40 is resistance welded to the electrode. Preferably an insulator 42 such as a tube of tetrafluoroethylene or the like suitable for use at the high temperatures likely to be encountered adjacent an engine cylinder is fitted over the conductor to electrically isolate it from the piezoelectric disc and from the metal body 12.

The diaphragm means 26 as above described includes a cup-shaped diaphragm member 44, and force transmitting means such as the force transfer means 46 and 48 illustrated in Fig. 2. Preferably one of the force transfer means comprises a rigid metal force spreading component which has at least a portion of limited crosssectional size or surface area disposed at a location between the cup-shaped diaphragm member 44 and the piezoelectric means 24 to retard heat transfer through the metal force transfer means. Preferably another one of the force transfer means comprises a component of a material of relatively lower thermal conductivity having a relatively large surface area bearing against the piezoelectric means to facilitate transfer of pressure force to the piezoelectric means while further retarding heat transfer.

In the preferred embodiment illustrated in Figs. 1-3, the cup-shaped diaphragm member 44 has an original configuration in which a generally cylindrical side-wall 44.1 and a generally planar cup bottom 44.2 are connected by a portion 44.3 of selected radius. Preferably the diaphragm member is formed of a springy, stiffly resilient temperature and corrosion resistant metal material such as the alloy called Inconel which has a nominal composition by weight of 80 percent nickel, 14 percent chromium and 6 percent iron. Such material is fatigue resistant and capable of withstanding the harsh chemical environment of engine combustion. Preferably the member has a diameter of about 8 millimeters, a materials thickness of about 0.1 to 0.2 millimetres (0.005 to 0.010 inches), and preferably about 0.18 millimetres (0.007 inches), and a depth of about 3 millimeters. The force transfer means 46 comprises a spherical metal ball of stainless steel or the like and is preferably of a size to be rotatable and axially movable along the longitudinal axis of the chamber 14 while tending to be centered in the chamber by the chamber side walls. If desired the ball is hollow as indicated at 47. The second force transfer means 48 comprises a ceramic material of low thermal conductivity such as a strong, easily shaped and somewhat lubricious pressed steatite material, or glass or the like. The second force transfer means has one side 48.1 which is preferably of relatively large surface area corresponding generally to that of the piezoelectric disc 24 for applying compressive force to the disc across the entire disc surface 24.2. The opposite side 48.2 preferably has a relatively smaller surface area in the shape of a socket or segment of a sphere of a diameter substantially corresponding to that of the ball 46 rotatably engaged with the ball.

In assembling the structure illustrated in Fig. 2 and 3, the cup-shaped member 44 is fitted over the neck portion 30 on the mounting body and is pressed with a selected force near the periphery of the member as indicated by arrows 45 in Fig. 3 so that the bottom 44.2 of the diaphragm member bears against the ball 46 and transfers that force to the socket 48 to apply a desired, predetermined preload compressive force to the piezoelectric means. The side wall 44.1 of the cup-shaped member is then welded as at 50 to the mounting body neck 30 for securing the cup member in the desired preload position on the mounting body. Where the diaphragm member material is thin relative to the bottom material as illustrated in Fig. 3, the weld 50 is preferably formed at the edge of the rim of the cup-shaped member 44 as shown in Fig. 3 and preferably comprises a precisely located pulsed laser weld formed around the mounting body neck 30 as diagrammatically illustrated in Fig. 3 by the arrow 51. With such a weld the cup member is sealed over the chamber 14 and retains the force transmitting means with a selected preload compressive force while the cup member material retains its initial spring resilience. In that arrangement, the original configuration of the diaphragm member as indicated by the broken line 44.4 in Fig. 3 is somewhat altered so the cup bottom 44.2 has a somewhat domed or parabolic shape and so that the cup bottom is adapted to flex in a reliable and consistent manner in response to fluid pressure forces applied to the diaphragm as indicated by arrows 43 in Figs. 1 and 3 for transmitting the presssure forces to the piezoelectric means 24. The radius 30.1 on the mounting body neck assures that such flexing is free of interference with the neck.

The screw threads 16 are preferably located on the body 12 at a selected distance A from the diaphragm member 44 so that when the device 10 is mounted on the engine 22 by means of the threads, the threads engage the engine immediately adjacent the fluid coolant passages diagrammatically illustrated at 53 in Fig. 2 which are typically provided in an internal combustion engine for dissipating heat from the engine in the area close to the cylinders 18. The chamber 14 is preferably of selected length such that the piezoelectric means 24 are located in the chamber at a distance B from the diaphragm member which is equal to, lesser or greater than the distance A as may be preferred. Where the piezoelectric means is located at a distance B equal to or less than the distance A but adjacent the cooling means 53, the piezoelectric means is located where heat is being most rapidly dissipated from the mounting body to keep the piezoelectric means relatively cool either during running operation of the engine or during the initial period after shutting off the engine when external engine temperatures may tend to rise sharply for a brief period of time. Alternately, where the distance B is greater than the distance A, the piezoelectric means have a greater spacing from the engine cylinder thermally isolating the piezoelectric means from the cylinder temperatures as will be understood.

The force transfer means 46 and 48 are arranged to transmit pressure from the diaphragm member 44 to the piezoelectric means while further retarding heat-transfer from the engine cylinder to the piezoelectric means through the diaphragm means. That is, the limited crosssection or surface area 46.1 of the first force transfer means engages the diaphragm bottom 44.2 at a location between the diaphragm bottom and the piezoelectric means 24 and accordingly heat transfer to the piezoelectric means through that limited crosssection or area of the ball is substantially retarded. However, the rigid high strength character of the ball material assures that any pressure force applied to the diaphragm bottom 44.2 is properly transmitted to the ball. The socket surface 48.2 of the second force transfer means engages a similarly sized but still limited cross-section or surface area of the ball at a second location between the diaphragm and piezoelectric means so that, while the area of that surface engagement assures proper transmission of presssure forces to the ceramic socket member with reduced risk of cracking, heat transfer to the piezoelectric means through the second force transfer means is again retarded. Use of the socket compensates for any lack of parallelism in the structure so the larger surface area side 48.2 of the socket reliably applies pressure force over the entire side 24.2 of the piezoelectric disc. Accordingly the device 10 provides improved transmission of pressure forces to the piezoelectric means while also providing improved retardation of heat transfer to the piezoelectric means for improved device reliability and service life.

In that preferred embodiment of the invention as shown in Fig. 2, the electronic means 28 preferably comprises high temperature hybrid electronics or the like such as have been described in the earlier filed, copending patent applications noted above. In this embodiment however, the electronics 28 are preferably mounted on an insulating substrate 28.1 of a ceramic material or the like as diagrammatically shown in Fig. 2 and the substrate is mounted in a housing means 52 on a rigid support such as the cylindrical housing wall 52.1 so that one edge 28.2 of the substrate is preferably disposed somewhat spaced from the rigid support at a predetermined positive location in the housing 52. The housing means is preferably detachably mounted on the body so that the electronic means 28 in the housing are secured in a predetermined position relative to the body 12 to be easily and reliably interconnected with the piezoelectric means through the conductor 40 and to be retained in that interconnection when subjected to the heavy vibrations likely to he encountered in an internal combustion engine environment. Preferably for example, the body chamber 32 provides guide surfaces 32.1 and a locating surface 32.2. The electronic means substrate 28.1 is disposed closely within the housing means 52 so that a cylindrical side wall 52.1 of the housing provides a rigid support for edges 28.3 of the substrate and also provides a guide surface 52.2, the housing also having locating surfaces 52.3 and 52.4 provided on a housing flange. Terminals 28.4 provided on the electronic means preferably extend from the housing means 52 in any conventional manner as shown in Fig. 2. The electronic means are provided with first fixed contact means 54 such as a circuit path termination at the edge 28.2 of the substrate as diagrammatically illustrated in Fig. 2, that portion of the edge 28.2 being spaced from the cylinder 52.1 as will be understood. Second, resilient, electrical contact means 56 are mounted on the body 12 connected to the conductor 40 to mate with the substrate contact 54. Preferably for example, a pair of spring leaves 56.1 (only one being shown) are secured to the conductor 40 by soldering or the like and are insulated from the body 12 by a bushing 56.2. The guide and locating surfaces of the housing means 52 and the device body 12 then cooperate as the housing body is inserted into the body chamber 32 to guide the substrate edge with the fixed and resilient contact means 54 between the spring leaves 56 into secure and reliable electrical engagement with each other. A body flange 12.3 is then rolled or otherwise formed over the housing locating surfaces for securing the electronic means on the body in secure and reliable electrical connection to the piezoelectric means 24. The metal body 12 surrounds the electronic means 28 in the chamber 32 as shown for providing the electronic means, the piezoelectric means, and the connection therebetween with electromagnetic shielding.

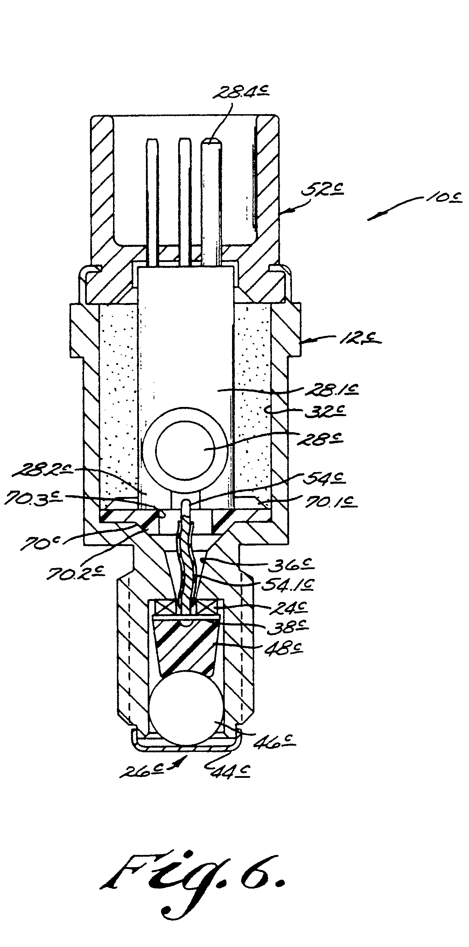

In another alternate preferred embodiment of the invention as shown in Fig. 4, wherein corresponding components are identified by corresponding reference numerals, the housing means 52 a is formed of metal and a metal support 53 a for the substrate 28.1 a extends into the body chamber 32 a. A fixed contact pin 54 a is connected to the circuit path on the substrate and the resilient second contact means comprises a spring clip 54 a having spring leaves engaging the pin 56 a inserted therein for precisely locating the end of the substrate 28.1 a to assure precise engagement between the fixed and resilient contact means 54 a and 56 a as will be understood. Preferably the space within the chamber 32 a is filled with a potting material 58 a of any conventional type for thermally and electrically isolating the electronic means from the body 12 a while also securing the electronic means against vibration forces. For example a highly viscous material 58 a could be introduced around the electronic means to reduced the effects of vibration.

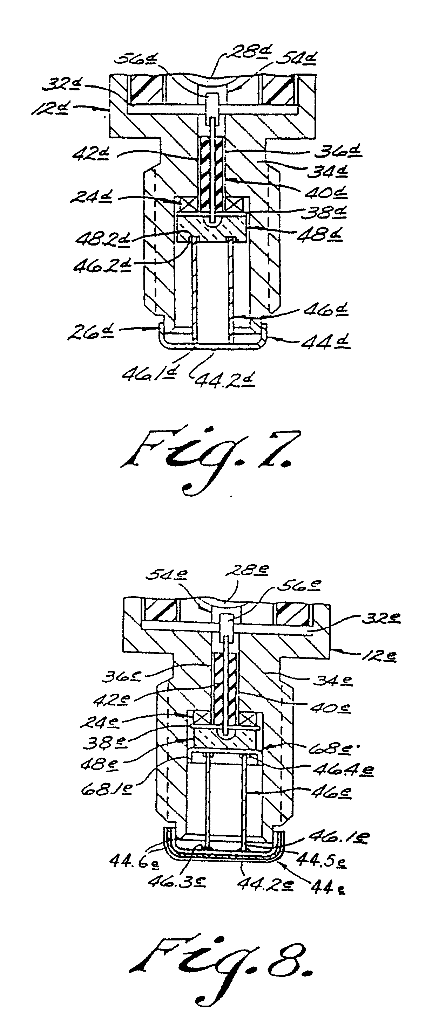

In another alternate preferred embodiment as shown in Fig. 5, the diaphragm means 26 b comprises a single component force transmitting means 60 b in the form of a ceramic member having one side 60.1 b bearing against the piezoelectric means and having an opposite side 60.2 b of a radius corresponding to the ball 46 b preferably tapering as indicated at 60.3 b. The force transmitting means is assembled with the cup-shaped member 44 b in the manner previously described and the single force transmitting component is centered and is of relatively low mass to cooperate with the cup-shaped member to provide precise pressure responsive characteristics in the device.

In the embodiment shown in Fig. 5 the electronic means 28 b is preferably mounted on a ceramic substrate 28.1 b which is mounted on the housing 52 b. Preferably for example, a pin 62 b is soldered to circuit path means (not shown) on the substrate and the pin is welded or otherwise connected to the terminal 28.4 b as diagrammatically indicated at 64 b in Fig. 5. The first contact means 54 b are provided on the substrate edge by securing a U-shaped spring clip to circuit path means (not shown) on the substrate. The second contact means 56 b comprises an extension of the conductor 40 b as shown in Fig. 5 and the insulator 42 b efectively seals the passage 36 b. An epoxy or other fixed holding compound curable or settable in situ or the like is deposited in the bottom of the chamber 32 b and the housing 52 b is mounted on the body 12 b so the locating surfaces 52.2 b are engaged with the body and so that the first contact clip 54 b slips over and electrically engages the second contact means 56 b. Preferably a barb 54.1 b on one leg of the U-shaped clip extends back on itself to grip the contact means 56 b to provide an assured connection between the contact means. The epoxy is then set or cured in situ for locking the contact means 54 b and 50 b securely together. The flange 12.3 b then secures the device in assembled relation. Preferably a resilient or viscous potting compound 58 b is also used over the fixed holding compound 66 b.

In another alternate embodiment as illustrated in Fig. 6, the passage 36 c formed in the mounting body 12 c is preferably tapered from a larger opening at the chamber 32 c to a narrower opening adjacent the piezoelectric donut 24 c. The first contact means 54 c comprises a spring lead with an insulator 54.1 c which is secured to circuit path means on the electronics substrate 28.1 c so that it extends into the passage 36 c with a selected bow in the lead as shown and passes through the piezoelectric donut 24 c to resiliently and electrically engage the electrode 38 c. The electrode than serves as the second contact means off the device. In that arrangement, the housing 52 c is mounted on the body 12 c by means of guide and locating surfaces as previously described and the tip of the spring lead 54 c is secured in the passage 36 c and guided into resilient electrical engagement with the electrode 38 c as will be understood. If desired, the electrode 38 c has a small central opening smaller than the tip of the first contact means 54 c for receiving and centering the tip in the opening. Preferably the spring lead wire 54 c has selected thermal expansion and resilient characteristics so the force of the lead engaging the electrode does not significantly alter the forces applied to the piezoelectric means during device operation. If desired, a centering support piece 70 c of a temperature resistant polymer such as tetrofluroethylene or the like has a groove 70.1 c receiving the edge 28.2 c of the electronic substrate and has a tapered locating boss 70.2 c centering the support in the passage 36 c so the lead 54 c passes through the insulating support aperture 70.3 c.

In another alternate preferred embodiment of the invention as shown in Fig. 7, the diaphragm means 26 d comprises a cup-shaped diaphragm member 44 d corresponding to that previously described with reference to Figs. 1 and 2. In this embodiment however, the first metal force transfer means 46 d preferably comprises a section of stainless steel tube or the like having one end 46.1 d engaged with the diaphragm bottom 44.2 d. The second force transfer means 48 d comprises a ceramic disc having a groove 48.2 d receiving the opposite end 46.2 d of the tube. The tube has a relatively small cross-sectional area between the diaphragm and the piezoelectric means for limiting heat transfer between the diaphragm and piezoelectric means.

In another alternate preferred embodiment as shown in Fig. 8, the diaphragm means comprises a cup-shaped diaphragm member having one end 46.1 e of a tube-shaped first force transfer means secured to the diaphragm bottom 44.2 e as indicated at 46.3 e. A thermal shunt member 68 e of copper or the like of relatively high thermal conductivity is disposed between the first force transfer means 46 e and the second cylindrical ceramic disc force transfer means 48 e to resiliently engage the metal body 12 e in heat-transfer relation thereto as indicated at 68.1 e. Preferably the shunt means is secured to the tube as indicated at 46.4 e. In that arrangement the tube 46 e and disc 48 e retard heat-transfer from the diaphragm bottom 44.2 e to the piezoelectric means and the thermal shunt 68 e tends to further retard such heat transfer by transfering heat away from the opposite 46.2 e of the tube to the metal body 12 e rather than to transfer such heat to the ceramic disc 24 e.

In the alternate preferred embodiment illustrated in Fig. 8, the diaphragm member 44 e is formed of a composite metal material having layers of metal of selected spring, thermal and corrosion resistant characteristics combined for providing improved pressure response and cycle life characteristics in the pressure transmitter. Preferably for example the diaphragm material has a core layer 44.5 e of stainless steel having outer cladding layers 44.6 e of equal thickness of Inconel metallurgically bonded to opposite sides of the core layer. In such a composite metal laminate material, the core layer provides the composite with desired stiff resilience while the cladding layers 44.6 e protect the composite against chemical corrosion in the engine combustion environment, the core and cladding layers being selected relative to each other so that intermetallic compounds or the like are not formed between the layers in the high temperature environment such as may tend to cause delamination or embrittlement or the like.

## Claims

1. A device for providing an electrical signal corresponding to the pressure in a cylinder of an internal combustion engine during the normal running operation of the engine, comprising:
   piezoelectric means (24) for providing an electrical signal in response to the application of pressure to the device, and
   means for mounting the piezoelectric means so that it can be attached to a cylinder of an engine so as to be responsive to the pressure therein,
   the mounting means including a metal body (12) having a chamber (14), opening to one end of the body, accommodating the piezoelectric means therein and having a cylindrical body rim portion (30) at said one end of the body around the opening of the chamber, means (16) for attaching the body to the engine so that the one end communicates with the inside of a cylinder, a cup-shaped metal diaphragm member (44) with a flexible cup bottom (44.2) and a cup side wall (44.1) fitted over the body rim portion so as to close the opening of the chamber and welded to the body, and a rigid force transmitting means (46,48) extending between the diaphragm member and the piezoelectric means,
   CHARACTERISED IN THAT
   the piezoelectric means is mounted on a fixed, rigid abutment (34) on the body and is pressed against the abutment by the force transmitting means (46,48), and
   the diaphragm member is welded around the body rim portion (30) with the rim of the diaphragm member located part way along the body rim portion and the flexible cup bottom (44.2) of the diaphragm member spaced from the body rim portion (30.1) in such a position that when the device is not in use the diaphragm (44) applies a predetermined pre-load compressive force to the piezoelectric means (24) through the force transmitting means (46,48).

2. A device according to claim 1 further characterized in that the force transmitting means (46,48) has a surface portion (46,60.2b) of selected radius at one end thereof bearing against the centre of the bottom (44.2) of the cup-shaped diaphragm member so that the force of said bottom against the force transmitting means in applying said preload compressive force normally provides the centre of the member bottom with an outwardly bulging, domed configuration to be exposed to fluid pressure in the engine cylinder.

3. A device according to claim 1 or claim 2 further characterized in that the force transmitting means (46,48) comprises a spherical metal ball (46) disposed in the chamber, the ball being of such a size as to be rotatable in the chamber and to be axially movable in the chamber, and a thermal barrier member (48) of a material relatively lower thermal conductivity is disposed between the ball and the piezoelectric means (24) for transferring force from the ball to the piezoelectric means while limiting heat-transfer between the ball and the piezoelectric means.

4. A device according to claim 3 further characterized in that the thermal barrier member (48) is formed of a ceramic material and has a socket surface with the configuration of a segment of a sphere rotatably engaged with the metal ball to spread the load being transferred from the metal ball to the piezoelectric means through the ceramic thermal barrier member.

5. A device according to claim 3 or claim 4 further characterized in that the piezoelectric means (24) comprises disc of piezoelectric material having one disc side surface (24.1) supported on said abutment (34) and having an opposite disc side surface (24.2) against the thermal barrier member (48).

6. A device according to claim 5 further characterized in that the Metal body has a bore (36) extending through said abutment (34), the piezoelectric disc (24) has a central opening aligned with said bore, an electrode (38) is disposed against said opposite side surface (34.2) of the piezoelectric disc between said disc side surface and the thermal barrier member (48) to collect electrical charge developed on the disc surface in response to application of compressive force to the disc, and a conductor (40) is electrically connected to the electrode (38) to extend through the disc aperture and the support section bore in electrically insulated relation thereto for connecting the electrode in an electrical circuit.

7. A device according to claim 6 wherein said opposite side and socket surfaces of said thermal barrier member (48) cooperate with the metal ball (46) and piezoelectric disc for spacing the thermal barrier member from the metal body within said chamber.

8. A device according to any preceding claim further characterized in that the mounting means comprises external screw threads (16) on the metal body (12) at a first selected distance from said one body end to be secured in close heat-transfer relation to the engine at a location immediately adjacent coolant fluid passage means provided in the engine for cooling said engine cylinder, the body has a neck portion (30) of reduced diameter forming said rim around the chamber opening at said one body end between said screw threads and said one body end for receiving the cup-shaped metal diaphragm (44) thereon, and the metal body and force transmitting means cooperate to locate the piezoelectric means at substantially the same distance from the one body end to provide improved cooling of the piezoelectric means during engine shutdown.

9. A device according to any one of claims 1 to 7 further characterized in that the mounting means comprises external screw threads (16) on the metal body (12) at a first selected distance from said one body end to be secured in close heat-transfer relation to the engine at a location immediately adjacent coolant fluid passage means provided in the engine for cooling said engine cylinder, the body has a neck portion of reduced diameter forming said rim around the chamber opening at said one body end between said screw threads and said one body end for receiving the cup-shaped metal diaphragm (44) thereon, and the metal body and force transmitting means cooperate to locate the piezoelectric means at a second, relatively greater distance from the one body end to provide improved cooling of the piezoelectric means during engine running.

10. A device according to claim 1 further characterized in that the force transmitting means comprises first rigid motion transfer means (46d,e) of a metal material having a portion of a cross-section of relatively lesser area than said diaphragm and a second rigid motion transfer means (48d,e) of a material of relatively lower thermal conductivity that said first motion transfer means, which are arranged in sequence between the diaphragm member (44) and the piezoelectric means (24).

11. A device according to claim 10 wherein said first rigid motion transfer means comprises a metal tube (46d or 46e) having one end engaged with said diaphragm and the second rigid motion transfer means comprises a ceramic cylinder (48d or 48e) mounted on an opposite end of said tube.

12. A device according to any preceding claim further characterized in that the cup-shaped diaphragm member (44) is thin relative to the thickness of the metal body and the side wall of the member is secured to the neck portion (30) by a laser weld.

13. A device according to claim 12 further characterized in that the cup-shaped diaphragm member (44) is formed of a corrosion resistant metal alloy having a nominal composition by weight of 80% nickel, 14% chromium and 6% iron.

**14.** A device according to any preceding claim further characterized in that the cup-shaped diaphragm member (44) has an original configuration in which the side wall is cylindrical, the centre of the bottom is planar, and a radiused portion joins the bottom to the side wall.

**15.** A device according to claim 2 further characterized in that said force transmitting means comprises a ceramic element (60b) having a radiused surface (60.2b) at one end thereof bearing against a selected area of the centre of the bottom of the diaphragm member and has a surface (60.1b) of relatively larger area at its opposite end pressing against the piezoelectric means (24).

**16.** A device according to any preceding claim further characterized in that the diaphragm (44e) comprises a composite metal laminate material having a core layer (44.5e) of a metal material selected for its spring characteristics and an outer layer (44.6e) of another metal material selected for its corrosion resistance characteristics metallurgically bonded to each side of the core layer of the laminate.

**17.** A device according to claim 16 characterised in that the core layer of the laminate material is formed of stainless steel and the outer layers thereof are formed of an alloy having a nominal composition by weight of 80% nickel, 14% chromium and 6% iron.

**18.** A device according to any preceding claim further characterized in that
electronic means (28) are carried in the mounting means to amplify said electrical signal for transmission to a location remote from the piezoelectric means,
conductor means (40) have first contact means (56) thereon and extend from the piezoelectric means to locate the first contact means in a selected position on the mounting means,
housing means (52) receive the electronic means thereon holding the electronic means in a selected position on the housing means,
the electronic means have second contact means (54) thereon,
locating and guide means are provided on the housing means and on the mounting means to cooperate to position the housing means on the mounting means with said first and second contact means engaged to electrically interconnect the piezoelectric means and the electronic means, and
means (12.3) detachably attach the housing means to the mounting means to reliably retain the contact means in such engagement when subjected to engine vibrations.

**19.** A device according to claim 18 further characterized in that the first contact means comprise resilient contact means (56) mounted in fixed position on the mounting means, the electronic means are mounted on an insulating substrate (28.1), the substrate is secured to the housing means so that one end of the substrate is spaced from the support, the second contact means comprise fixed contact means (54) secured to the substrate at said one substrate end, and the locating and guide means cooperate to position the fixed second contact means in reliable and secure engagement with the resilient first contact means.

**20.** A device according to any one of claims 1 to 17 further characterized in that
the mounting means has a second chamber (32) therein open at the opposite body end and forms a support section with a passage therein extending between the chambers,
the piezoelectric means (24) are disposed against the support section and a conductor means (40) extends from the piezoelectric means through the passage and has a stiff end portion carrying first contact means (56a) to locate the first contact means in the second chamber,
electronic means (28) are provided to amplify the electrical signal provided by the piezoelectric means for transmission to a remote location,
housing means (52) receive the electronic means thereon for holding the electronic means in a selected position on the housing means,
second contact means (54) are provided on the electronic means,
locating and guide means are provided on the housing means and on the mounting means and cooperate to position the housing means on the mounting means with said first and second contact means engaged to electrically interconnect the electronic and piezoelectric means,
means (12.3) detachably attach the housing means to the mounting means to reliably retain the contact means in such engagement when subjected to engine vibrations, and
the second contact means comprises a U-shaped spring clip having a pair of spring leaf legs (54a), having one leg secured to said electronic means, and having said first contact means on the stiff extending conductor means end (56a) received between said spring leaf legs to be resiliently engaged by said legs for electrically connecting the piezoelectric means to the electronic means.

21. A method of providing a desired preload force on a piezoelectric pressure responsive element (24) in a pressure transducing device (10) suitable for attachment to a cylinder of an internal combustion engine in order to monitor the pressure therein, the device having an open-ended hollow body (12) containing the piezoelectric element (24) and a rigid force transmitting member (46,48) extending from a flexible diaphragm (44) closing the open end (30) of the body to the piezoelectric element (24)), the open end (30) of the body being in the form of a tube and the diaphragm being cup-shaped with a cylindrical side wall (44.1) which fits the end (30) of the body,

characterised in that initially the diaphragm (44) is axially slidable on the body end (30), and in that the method includes subjecting the diaphragm to a force corresponding to the desired preload force so as axially to displace the diaphragm on the body end and then welding the diaphragm to the body end in the position to which it has been displaced.

**Revendications**

1. Un dispositif destiné à fournir un signal électrique correspondant à la pression régnant dans un cylindre d'un moteur à combustion interne pendant la marche normale du moteur, comprenant :

un moyen piézoélectrique (24) propre à fournir un signal électrique en réponse à l'application de pression au dispositif, et

un moyen de montage du moyen piézoélectrique permettant de le fixer a un cylindre du moteur de manière a le rendre sensible à la pression régnant dans celui-ci,

le moyen de montage comportant, un corps métallique (12) comportant une chambre (14), débouchant à une première extrémité du corps, recevant le moyen piézoélectrique et présentant une portion de rebord de corps cylindrique (30) a ladite première extrémité dudit corps autour de l'ouverture de la chambre, un moyen (16) permettant de fixer corps au moteur de manière que la première extrémité communique avec l'intérieur d'un cylindre, un élément de diaphragme métallique en forme de cuvette (44) avec un fond de cuvette flexible (44.2) et une paroi latérale de cuvette (44.1) adaptée par-dessus la portion de rebord de corps de manière à clore l'ouverture de la chambre et étant soudée au corps, et un moyen de transmission de force rigide (46, 48) s'étendant entre l'élément de diaphragme et le moyen piézoélectrique.

CARACTERISE EN CE QUE

le moyen piézoélectrique est monté sur une butée fixe et rigide (34) sur le corps et est pressé contre la butée par le moyen de transmission de force (46, 48), et

l'élément de diaphragme est soudé autour de la portion de rebord de corps (30), le rebord de l'élément de diaphragme occupant une partie de la longueur de la portion de rebord de corps et le fond de cuvette flexible (44.2) de l'élément de diaphragme étant espacé de la portion de rebord de corps (30.1) en une position telle que lorsque le dispositif n'est pas en utilisation, le diaphragme (44) applique une force de compression de précharge prédéterminée au moyen piézoélectrique (24) par l'intermédiaire du moyen de transmission de force (46, 48).

2. Un dispositif selon la revendication 1, caractérisé en outre en ce que le moyen de transmission de force (46, 48) présente à l'une de ses extrémités une portion de surface (46, 60.2b) de rayon sélectionné qui porte contre le centre du fond (44.2) de l'élément de diaphragme en forme de cuvette de sorte que la force dudit fond contre le moyen de transmission de force dans l'application de ladite force de compression de précharge confère normalement au centre du fond de l'élément une configuration bombée saillant vers l'extérieur destinée à être exposée à la pression de fluide régnant dans le cylindre de moteur.

3. Un dispositif selon la revendication 1 ou la revendication 2, caractérisé en outre en ce que le moyen de transmission de force (46, 48) comprend une bille métallique sphérique (46) disposée dans la chambre, la bille étant d'une taille telle qu'elle puisse tourner dans la chambre et bouger axialement dans la chambre, et en ce qu'un élément d'isolement thermique (48) en une matière de conductivité thermique relativement faible est disposé entre la bille et le moyen piézoélectrique (24) pour transmettre la force de la bille au moyen piézoélectrique tout en limitant le transfert de chaleur entre la bille et le moyen piézoélectrique.

4. Un dispositif selon la revendication 3, caractérisé en outre en ce que l'élément d'isolement thermique (48) est formé d'une matière céramique et présente une surface de réception en forme de calotte sphérique coopérant à rotation avec la bille métallique pour étaler la charge transmise de la bille métallique au moyen piézoélectrique par l'intermédiaire de l'élément d'isolement thermique en céramique.

5. Un dispositif selon la revendication 3 ou la revendication 4, caractérisé en outre en ce que le moyen piézoélectrique (24) comprend un disque de matière piézoélectrique présentant une surface latérale de disque (24.1) supportée par ladite butée (34) et présentant une surface latérale de disque opposée (24.2) portant contre l'élément d'isolement thermique (48).

6. Un dispositif selon la revendication 5, caractérisé en outre en ce que le corps métallique présente un alésage (36) s'étendant à travers ladite butée (34), le disque piézoélectrique (24) présente une ouverture centrale alignée avec ledit alésage, une électrode (38) est disposée contre ladite surface latérale opposée (24.2) du disque piézoélectrique entre ladite surface latérale de disque et l'élément d'isolement thermique (48) pour recueillir la charge électrique créée sur la surface du disque en réponse à l'application d'une force de compression au disque, et un conducteur (40) passant par l'ouverture du disque et l'alésage de section de support en en étant électriquement isolé est relié électriquement à l'électrode (38) pour permettre de relier l'électrode à un circuit électrique.

7. Un dispositif selon la revendication 6 dans lequel ladite surface latérale opposée et ladite surface de réception dudit élément d'isolement thermique (48) coopèrent avec la bille métallique (46) et avec le disque piézoélectrique pour maintenir l'élément d'isolement thermique à distance du corps métallique à l'intérieur de ladite chambre.

8. Un dispositif selon l'une quelconque des revendications précédentes, caractérisé en outre en ce que le moyen de montage comprend des filets de vissage externes (16) sur le corps métallique (12) à une première distance sélectionnée de ladite première extrémité du corps pour assurer sa fixation en relation d'échange thermique étroit avec le moteur en un emplacement immédiatement adjacent à un moyen de passage de fluide de refroidissement prévu dans le moteur pour refroidir ledit cylindre de moteur, en ce que le corps présente une portion étranglée (30) de diamètre réduit formant ledit rebord autour de la chambre débouchant à ladite première extrémité du corps entre lesdits filets de vissage et ladite première extrémité du corps pour recevoir le diaphragme métallique en forme de cuvette (44), et en ce que le corps métallique et le moyen de transmission de force coopèrent pour positionner le moyen piézoélectrique sensiblement à la même distance de la première extrémité du corps pour assurer un refroidissement amélioré du moyen piézoélectrique lorsque le moteur est à l'arrêt.

9. Un dispositif selon l'une quelconque des revendications 1 à 7, caractérisé en outre en ce que le moyen de montage comprend des filets de vissage externes (16) sur le corps métallique (12) à une première distance sélectionnée de ladite première extrémité du corps pour assurer sa fixation en relation d'échange thermique étroit avec le moteur en un emplacement immédiatement adjacent à un moyen de passage de fluide de refroidissement prévu dans le moteur pour refroidir ledit cylindre de moteur, en ce que le corps présente une portion étranglée de diamètre réduit formant ledit rebord autour de la chambre débouchant à ladite première extrémité du corps entre lesdits filets de vissage et ladite première extrémité du corps pour recevoir le diaphragme métallique en forme de cuvette (44), et en ce que le corps métallique et le moyen de transmission de force coopèrent pour positionner le moyen piézoélectrique sensiblement à une deuxième distance relativement plus grande de la première extrémité du corps pour assurer un refroidissement amélioré du moyen piézoélectrique pendant la marche du moteur.

10. Un dispositif selon la revendication 1, caractérisé en outre en ce que le moyen de transmission de force comprend un premier moyen de transmission de mouvement rigide (46d,e) en une matière métallique présentant une portion dont l'aire de section transversale est relativement moindre que celle dudit diaphragme et un deuxième moyen de transmission de mouvement rigide (48d,e) en un matière de conductivité thermique relativement plus basse que celle dudit premier moyen de transmission de mouvement, qui sont disposés en succession entre l'élément de diaphragme (44) et le moyen piézoélectrique (24).

11. Un dispositif selon la revendication 10, dans lequel ledit premier moyen de transmission de mouvement rigide comprend un tube métallique (46d ou 46e) dont l'une des extrémités coopère avec ledit diaphragme, et le deuxième moyen de transmission de mouvement rigide comprend un cylindre de céramique (48d ou 48e) monté sur une extrémité opposée dudit tube.

**12.** Un dispositif selon l'une quelconque des revendications précédentes, caractérisé en outre en ce que l'élément de diaphragme en forme de cuvette (44) est mince par rapport à l'épaisseur du corps métallique, et en ce que la paroi latérale de l'élément est fixée à la portion étranglée (30) par une soudure au laser.

**13.** Un dispositif selon la revendication 12, caractérisé en outre en ce que l'élément de diaphragme en forme de cuvette (44) est formé d'un alliage métallique résistant à la corrosion dont la composition pondérale nominale est de 80 % de nickel, 14 % de chrome et 6 % de fer.

**14.** Un dispositif selon l'une quelconque des revendications précédentes, caractérisé en outre en ce que l'élément de diaphragme en forme de cuvette (44) présente une configuration d'origine dans laquelle la paroi latérale est cylindrique, le centre du fond est plan et une portion arrondie joint le fond à la paroi latérale.

**15.** Un dispositif selon la revendication 2, caractérisé en outre en ce que ledit moyen de transmission de force comprend un élément en céramique (60b) présentant à l'une de ses extrémités une surface arrondie (60.2b) portant contre une zone sélectionnée du centre du fond de l'élément de diaphragme et présentant à son extrémité opposée une surface d'aire relativement plus grande (60.1b) pressant contre le moyen piézoélectrique (24).

**16.** Un dispositif selon l'une quelconque des revendications précédentes, caractérisé en outre en ce que le diaphragme (44e) comprend un matériau stratifié métallique composite comportant une couche centrale (44.5e) en un matériau métallique sélectionné pour ses caractéristiques d'élasticité et une couche externe (44.6e) en un autre matériau métallique sélectionné pour ses caractéristiques de résistance à la corrosion liée métallurgiquement à chaque face de la couche centrale du stratifié.

**17.** Un dispositif selon la revendication 16, caractérisé en ce que la couche centrale du matériau stratifié est formée d'acier inoxydable et en ce que ses couches externes sont formées d'un alliage dont la composition pondérale nominale est de 80 % de nickel, 14 % de chrome et 6 % de fer.

**18.** Un dispositif selon l'une quelconque des revendications précédentes, caractérisé en outre en ce que

des moyens électroniques (28) sont supportés dans le moyen de montage pour amplifier ledit signal électrique en vue de sa transmission à en emplacement éloigné du moyen piézoélectrique,

les moyens conducteurs (40) portent de premiers moyens de contact (56) et s'étendent depuis le moyen piézoélectrique pour placer les premiers moyens de contact dans une position sélectionnée sur le moyen de montage,

des moyens de logement (52) reçoivent les moyens électroniques en maintenant les moyens électroniques dans une position sélectionnée sur les moyens de logement,

les moyens électroniques portent de deuxièmes moyens de contact (54),

des moyens de positionnement et de guidage sont prévus sur les moyens de logement et sur le moyen de montage pour coopérer au positionnement des moyens de logement sur le moyen de montage avec engagement desdits premiers et deuxièmes moyens de contact pour interconnecter électriquement le moyen piézoélectrique et les moyens électroniques, et

des moyens (12.3) fixent de manière les moyens de logement au moyen de montage pour maintenir fiablement engagés les moyens de contact lorsqu'ils sont soumis à des vibrations du moteur.

**19.** Un dispositif selon la revendication 18, caractérisé en outre en ce que les premiers moyens de contact comprennent des moyens de contact élastiques (56) montés en position fixe sur le moyen de montage, les moyens électroniques sont montés sur un substrat isolant (28.1), le substrat est fixé aux moyens de logement de manière que l'une des extrémités du substrat soit espacée du support, les deuxièmes moyens de contact comprennent des moyens de contact fixes (54) fixés au substrat à ladite extrémité du substrat, et les moyens de positionnement et de guidage coopèrent à positionner les deuxièmes moyens de contact fixes pour les maintenir fiablement et solidement en engagement avec les premiers moyens de contact élastiques.

**20.** Un dispositif selon l'une quelconque des revendications 1 à 17, caractérisé en outre en ce que

le moyen de montage comporte une deuxième chambre (32) ouverte à l'extrémité opposée du corps et forme une section de support dans laquelle est ménagé un passage s'étendant entre les chambres,

les moyens piézoélectriques (24) sont disposés contre la section de support et un moyen conducteur (40) s'étend depuis les moyens piézoélectriques à travers le passage et présente une portion terminale rigide portant de premiers moyens de contact (56a) pour positionner les premiers moyens de contact dans la deuxième chambre,

des moyens électroniques (28) sont prévus pour amplifier le signal électrique fourni par les moyens piézoélectriques en vue de sa transmission à un emplacement éloigné,

des moyens de logement (52) reçoivent les moyens électroniques pour maintenir les moyens électroniques dans une position sélectionnée sur les moyens de logement,

de deuxièmes moyens de contact (54) sont prévus sur les moyens électroniques,

des moyens de positionnement et de guidage sont prévus sur les moyens de logement et sur le moyen de montage et coopèrent au positionnement des moyens de logement sur le moyen de montage avec engagement desdits premiers et deuxièmes moyens de contact pour interconnecter électriquement les moyens piézoélectriques et les moyens électroniques,

des moyens (12.3) fixent de manière amovible les moyens de logement au moyen de montage pour maintenir fiablement engagés les moyens de contact lorsqu'ils sont soumis aux vibrations du moteur, et

le deuxième moyen de contact comprend une pince à ressort en U comportant une paire de branches élastiques plates (54a) dont l'une est assujettie auxdits moyens électronique, lesdits premiers moyens de contact portés par l'extrémité rigide du moyen conducteur (56a) étant reçus entre lesdites branches élastiques plates pour faire prise élastiquement avec lesdites branches afin de connecter électriquement les moyens piézoélectriques aux moyens électroniques.

21. Un procédé de création d'une force de précharge désirée sur un élément piézoélectrique sensible à la pression (24) dans un dispositif transducteur de pression (10) adapté à être assujetti à un cylindre d'un moteur à combustion interne afin de contrôler la pression régnant dans celui-ci, le dispositif comportant un corps creux (12) à extrémité ouverte contenant l'élément piézoélectrique (24) et un élément de transmission de force rigide (46, 48) s'étendant d'un diaphragme flexible (44) fermant l'extrémité ouverte (30) du corps à l'élément piézoélectrique (24), l'extrémité ouverte (30) du corps ayant la forme d'un tube et le diaphragme étant en forme de cuvette avec une paroi latérale cylindrique (44.1) qui épouse l'extrémité (30) du corps,

caractérisé en ce que le diaphragme (44) peut initialement coulisser sur l'extrémité du corps (30) et en ce que le procédé comprend la soumission du diaphragme à une force correspondant à la force de précharge désirée de manière à déplacer axialement le diaphragme sur l'extrémité du corps, puis le soudage du diaphragme à l'extrémité du corps dans la position dans laquelle le déplacement l'a amené.

**Patentansprüche**

1. Vorrichtung zur Erzeugung eines elektrischen Signals entsprechend dem Druck in einem Zylinder einer Verbrennungskraftmaschine während des normalen Betriebs der Maschine, mit einem piezoelektrischen Mittel (24) zur Erzeugung eines elektrischen Signals in Abhängigkeit von der Ausübung von Druck auf die Vorrichtung und einem Mittel zum Befestigen des piezoelektrischen Mittels in der Weise, daß es an einem Zylinder einer Maschine so befestigt werden kann, daß es auf den darin herrschenden Druck reagiert, wobei das Befestigungsmittel einen Metallkörper mit einer an einem Ende des Körpers offenen Kammer (14) enthält, der das piezoelektrische Mittel aufnimmt und einen zylindrischen Körperrandbereich (30) an dem einen Körperende rund um die Öffnung der Kammer aufweist, ferner ein Mittel (16) zum Befestigen des Körpers an der Maschine enthält, so daß das offene Ende mit der Innenseite eines Zylinders in Verbindung steht, außerdem ein schalenförmiges Metallmembranteil (44) mit einem flexiblen Schalenboden (44.2) und einer Schalenseitenwand (44.1) enthält, der zum Verschließen der Kammer über dem Körperrandbereich sitzt und mit dem Körper verschweißt ist, und ein starres Kraftübertragungsmittel (46, 48) enthält, das sich zwischen dem Membranteil und dem piezoelektrischen Mittel erstreckt, **dadurch gekennzeichnet,** daß das piezoelektrische Mittel auf einem festen, starren Widerlager (34) an dem Körper angebracht und mit Hilfe des Kraftübertragungsmittels (46, 48) gegen das Widerlager gedrückt ist, und daß das Membranteil rund um den Körperrandbereich (30) angeschweißt ist, wobei der Rand des Membranteils zum Teil längs des Körperrandbereichs verläuft und der flexible Schalenboden (44.2) des Membranteils im Abstand von dem Körperrandbereich (30.1) in einer solchen Position liegt, daß dann, wenn die Vorrichtung nicht in Benutzung ist, die Membran (44) eine vorbestimmte Vorlast-Druckkraft auf das piezoelektrische Mittel (24) durch das Kraftübertragungsmittel (46, 48) ausübt.

2. Vorrichtung nach Anspruch 1, **dadurch gekennzeichnet,** daß das Kraftübertragungsmittel (46, 48) einen Oberflächenabschnitt (46, 60.2b) mit ausgewähltem Radius an einem Ende aufweist, der gegen die Mitte des Bodens (44.2) des schalenförmigen Membranteils drückt, so daß die Kraft des Bodens gegen das Kraftübertragungsmittel bei der Ausübung der Vorlast-Druckkraft nornalerweise der Mitte des Bodens eine nach außen vorstehende, gewölbte Form verleiht, die dem Strömungsmitteldruck im Maschinenzylinder ausgesetzt ist.

3. Vorrichtung nach Anspruch 1 oder 2, **dadurch gekennzeichnet,** daß das Kraftübertragungsmittel (46, 48) eine sphärische Metallkugel (46) enthält, die in der Kammer angeordnet ist, wobei die Kugel eine solche Größe hat, daß sie sich in der Kammer drehen und axial bewegen kann, und ferner ein Wärmesperrglied (48) aus einem Material mit relativ niedriger Wärmeleitfähigkeit enthält, das zwischen der Kugel und dem piezoelektrischen Mittel (24) zum Übertragen einer Kraft von der Kugel auf das piezoelektrische Mittel angeordnet ist, während der Wärmeübergang zwischen der Kugel und dem piezoelektrischen Mittel begrenzt wird.

4. Vorrichtung nach Anspruch 3, **dadurch gekennzeichnet,** daß das Wärmesperrglied (48) aus einem keramischen Material geformt ist und eine Pfannenfläche mit der Form eines Kugelsegments hat, die drehbar mit der Metallkugel in Eingriff steht, damit die von der Metallkugel auf das piezoelektrische Mittel über das keramische Wärmesperrglied übertragene Last verteilt wird.

5. Vorrichtung nach Anspruch 3 oder 4, **dadurch gekennzeichnet,** daß das piezoelektrische Mittel (24) eine Scheibe aus piezoelektrischem Material enthält, wobei eine Scheibenseitenfläche (24.1) auf dem Widerlager (34) aufliegt und die andere Scheibenseitenfläche (24.2) an dem Wärmesperrglied (48) anliegt.

6. Vorrichtung nach Anspruch 5, **dadurch gekennzeichnet,** daß der Metallkörper eine Bohrung (36) aufweist, die sich durch das Widerlager (34) erstreckt, daß die piezoelektrische Scheibe (24) eine mit der Bohrung in einer Linie liegende Mittelöffnung aufweist, daß an der anderen Seitenfläche (34.2) der piezoelektrischen Scheibe zwischen der Scheibenseitenfläche und dem Wärmesperrglied (48) eine Elektrode (38) angeordnet ist, die elektrische Ladung sammelt, die sich auf der Scheibenfläche als Reaktion auf die Ausübung einer Druckkraft auf die Scheibe entwickelt, und daß mit der Elektrode (38) ein Leiter (40) elektrisch verbunden ist, der sich durch die Scheibenöffnung und die Bohrung davon isoliert erstreckt, damit die Elektrode an eine elektrische Schaltung angeschlossen wird.

7. Vorrichtung nach Anspruch 6, bei welcher die andere Seite und die Pfannenfläche des Wärmesperrglieds (48) mit der Metallkugel (46) und der piezoelektrischen Scheibe so zusammenwirken, daß das Wärmesperrglied innerhalb der Kammer im Abstand von dem Metallkörper gehalten wird.

8. Vorrichtung nach einem der vorhergehenden Ansprüche, **dadurch gekennzeichnet,** daß das Befestigungsmittel äußere Schraubengewindegänge (16) an dem Metallkörper (12) in einem ersten ausgewählten Abstand von dem einen Körperende aufweist, das in enger Wärmeüberragungsbeziehung mit der Maschine an einer Stelle anzubringen ist, die unmittelbar an Kühlmitteldurchlässe angrenzt, die in der Maschine zum Kühlen des Maschinenzylinders angebracht sind, daß der Körper einen Halsbereich (30) mit reduziertem Durchmesser aufweist, der den die Kammeröffnung an dem einen Körperende Zwischen den Schraubengewindegängen und dem einen Körperende zum Aufnehmen der schalenförmigen Metallmembran (44) umgebenden Rand bildet, und daß der Metallkörper und das Kraftübertragungsmittel so zusammenwirken, daß das piezoelektrische Mittel in im wesentlichen gleichem Abstand von dem einen Körperende gehalten wird, damit eine verbesserte Kühlung des piezoelektrischen Mittels während des Abschaltens der Maschine erzielt wird.

9. Vorrichtung nach einem der Ansprüche 1 bis 7, **dadurch gekennzeichnet,** daß das Befestigungsmittel äußere Schraubengewindegänge (16) an dem Metallkörper (12) in einem ersten ausgewählten Abstand von dem einen Körperende aufweist, das in enger Wärmeüberragungsbeziehung mit der Maschine an einer Stelle anzubringen ist, die unmittelbar an Kühlmitteldurchlässe angrenzt, die in der Maschine zum Kühlen des Maschinenzylinders angebracht sind, daß der Körper einen Halsbereich (30) mit reduziertem Durchmesser aufweist, der den die Kammeröffnung an dem einen Körperende zwischen den Schraubengewindegängen und dem einen Körperende zum Aufnehmen der schalenförmigen Metallmembran (44) umgebenden Rand bildet, und daß der Metallkörper und das Kraftübertragungsmittel so zusammenwirken, daß das piezoelektrische Mittel in einem zweiten, relativ größeren Abstand von dem einen Körperende gehalten wird, damit eine verbesserte Kühlung des piezoelektrischen Mittels während des Betriebs der Maschine erzielt wird.

10. Vorrichtung nach Anspruch 1, **dadurch gekennzeichnet,** daß das Kraftübertragungsmittel ein erstes starres Bewegungsübertragungsmittel (46d, e) aus einem Metallmaterial enthält, bei dem ein Abschnitt einen Querschnitt mit relativ kleinerer Fläche als die Membran hat, und ferner ein Zweites starres Bewegungsübertragungsmittel (48d, e) aus einem Material mit relativ niedrigerer Wärmeleitfähigkeit als das erste Bewegungsübertragungsmittel enthält, wobei diese Mittel hintereinander zwischen dem Membranglied (44) und dem piezoelektrischen Mittel (24) angeordnet sind.

11. Vorrichtung nach Anspruch 10, **dadurch gekennzeichnet,** daß das erste starre Bewegungsübertragungsmittel ein Metallrohr (46d oder 46e) enthält, das mit einem Ende mit der Membran in Eingriff steht, und daß das zweite starre Bewegungsübertragungsmittel einen Keramikzylinder (48d oder 48e) enthält, der an einem anderen Ende des Rohrs befestigt ist.

12. Vorrichtung nach einem der vorhergehenden Ansprüche, **dadurch gekennzeichnet,** daß das schalenförmige Membranglied (44) relativ zur Dicke des Metallkörpers dünn ist und daß die Seitenwand des Membranglieds durch eine Laserschweißung an dem Halbsabschnitt (30) befestigt ist.

13. Vorrichtung nach Anspruch 12, **dadurch gekennzeichnet,** daß das schalenförmige Membranglied (44) aus einer korrosionsbeständigen Metallegierung gebildet ist, die eine Nennzusammensetzung mit 80 Gew.% Nickel, 14 Gew.% Chrom und 6 Gew.% Eisen hat.

14. Vorrichtung nach einem der vorhergehenden Ansprüche, **dadurch gekennzeichnet,** daß das schalenförmige Membranglied (44) eine ursprüngliche Gestalt hat, bei der die Seitenwand zylindrisch ist, die Mitte des Bodens eben ist und ein gekrümmter Abschnitt den Boden mit der Seitenwand verbindet.

15. Vorrichtung nach Anspruch 2, **dadurch gekennzeichnet,** daß das Kraftübertragungsmittel ein Keramikelement (60b) mit einer gekrümmten Fläche (60.2b) an einem Ende enthält, die gegen eine ausgewählte Fläche der Mitte des Bodens des Membranglieds drückt, und an ihrem entgegengesetzten Ende eine Fläche (60.1b) mit relativ größerer Abmessung aufweist, die gegen das piezoelektrische Mittel (24) drückt.

16. Vorrichtung nach einem der vorhergehenden Ansprüche, **dadurch gekennzeichent,** daß die Membran (44e) aus einem Verbundmetall-Laminatmaterial besteht, das eine Kernschicht (44.5e) aus einem Metallmaterial enthält, das wegen seiner Federeigenschaften ausgewählt ist, und eine Außenschicht (44.6e) aus einem anderen Metallmaterial enthält, die wegen ihrer Korrosionsbeständigkeit ausgewählt ist, wobei die Schichten metallurgisch jeweils mit einer Seite der Kernschicht des Laminats verbunden sind.

17. Vorrichtung nach Anspruch 16, **dadurch gekennzeichnet,** daß die Kernschicht des Laminatmaterials aus Edelstahl besteht und daß seine Außenschichten aus einer Legierung gebildet sind, die eine Nennzusammensetzung mit 80 Gew.% Nickel, 14 Gew.% Chrom und 6 Gew.% Eisen hat.

18. Vorrichtung nach einem der vorhergehenden Ansprüche, **dadurch gekennzeichnet,** daß in dem Befestigungsmittel Elektronikmittel (28) untergebracht sind, die das elektrische Signal für eine Übertragung zu einem von dem piezoelektrischen Mittel entfernten Ort verstärken, daß ein Leitermittel (40) mit ersten Kontaktmitteln (56) Zu versehen ist, die sich von dem piezoelektrischen Mittel erstrecken, wobei die ersten Kontaktmittel in einer ausgewählten Position auf dem Befestigungsmittel angeordnet sind, daß die Elektronikmittel von einem Gehäusemittel (52) aufgenomen sind, das die Elektronikmittel in einer ausgewählten Position auf dem Gehäusemittel hält, daß die Elektronikmittel mit zweiten Kontaktmitteln (54) versehen sind, daß Anbringungs- und Führungsmittel an dem Gehäusemittel und an dem Befestigungsmittel vorgesehen sind, die so zusammenwirken, daß das Gehäusemittel auf dem Befestigungsmittel so positioniert wird, daß das erste und das zweite Kontaktmittel in Eingriff stehen, um das piezoelektrische Mittel und das Elektronikmittel elektrisch miteinander zu verbinden, und daß das Gehäusemittel mit Hilfe von Mitteln (12.3) lösbar an dem Befestigungsmittel angebracht ist, damit die Kontaktmittel zuverlässig in dem Eingriff gehalten werden, wenn sie Schwingungen der Maschine ausgesetzt sind.

19. Vorrichtung nach Anspruch 18, **dadurch gekennzeichnet,** daß die ersten Kontaktmittel ein Federkontaktmittel (56) enthalten, das an dem Befestigungsmittel fest angebracht ist, daß die Elektronikmittel auf einem isolierenden Substrat (28.1) angebracht sind, das an dem Gehäusemittel so befestigt ist, daß ein Ende des Substrats im Abstand von dem Träger gehalten wird, daß die zweiten Kontaktmittel ein festes Kontaktmittel (54) enthalten, das an dem einen Ende des Substrats befestigt ist, und daß das Lokalisierungs- und Führungsmittel so wirkt, daß die festen zweiten Kontaktmittel zuverlässig und sicher in Eingriff mit dem federnden ersten Kontaktmittel positioniert werden.

20. Vorrichtung nach einem der Ansprüche 1 bis 17, **dadurch gekennzeichnet,** daß in dem Anbringungsmittel eine zweite Kammer (32) angebracht ist, die an dem entgegengesetzten Körperende offen ist und einen Trägerabschnitt mit einer darin befindlichen Durchführung bildet, die sich zwischen den Kammern erstreckt, daß das piezoelektrische Mittel (24) gegen den Trägerabschnitt gehalten ist, wobei sich ein Leitermittel (40) von dem piezoelektrischen Mittel aus durch die Durchführung erstreckt und einen steifen Endabschnitt aufweist, der ein erstes Kontaktmittel (56a) trägt, damit das erste Kontaktmittel in der zweiten Kammer gehalten wird, daß Elektronikmittel (28) vorgesehen sind, die das von dem piezoelektrischen Mittel gelieferte elektrische Signal für die Übertragung Zu einem entfernten Ort verstärken, daß Gehäusemittel (52) die Elektronikmittel aufnehmen und diese in einer ausgewählten Position festhalten, daß zweite Kontaktmittel (54) an den Elektronikmitteln vorgesehen sind, daß an dem Gehäusemittel und an dem Anbringungsmittel Positionierungs- und Führungsmittel vorgesehen sind, die so zusammenwirken, daß sie das Gehäusemittel auf dem Anbringungsmittel so positionieren, daß die ersten und zweiten Kontaktmittel in Eingriff stehen, um die Elektronikmittel und die piezoelektrischen Mittel elektrisch miteinander zu verbinden, daß das Gehäusemittel mit Hilfe von Mitteln (12.3) an dem Anbringungsmittel lösbar befestigt ist, damit die Kontaktmittel zuverlässig in diesem Eingriff miteinander gehalten werden, wenn sie Maschinenschwingungen ausgesetzt sind, und daß das zweite Kontaktmittel eine U-förmige Federklammer mit zwei Federblattschenkeln (54a) enthält, wobei ein Schenkel an den Elektronikmitteln befestigt ist und wobei die ersten Kontaktmittel an dem starren, abstehenden Leitermittelende (56a) zwischen den Federblattschenkeln aufgenommen sind, damit sie federnd von den Schenkeln zum elektrischen Verbinden der piezoelektrischen Mittel mit den Elektronikmitteln erfaßt werden.

21. Verfahren zum Erzeugen einer gewünschten Vorlastkraft an einem piezoelektrischen, druckempfindlichen Element (24) in einer Druckwandlervorrichtung (10), die zum Befestigen am Zylinder einer Verbrennungskraftmaschine geeignet ist, um den darin herrschenden Druck zu überwachen, wobei die Vorrichtung einen am Ende offenen hohlen Körper (12) aufweist, der ein piezoelektrisches Element (24) und ein starres Kraftübertragungsglied (26, 48) enthält, das sich von einer flexiblen, das offene Ende (30) des Körpers verschließenden Membran zu dem piezoelektrischen Element (24) erstreckt, wobei das offene Ende (30) des Körpers die Form eines Rohrs hat, während die Membran schalenförmig mit einer zylindrischen Seitenwand (44.1) ausgebildet ist, die zu dem Ende (30) des Körpers paßt, **dadurch gekennzeichnet,** daß die Membran (44) anfänglich auf dem Ende (30) des Körpers axial verschiebbar ist, und daß das Verfahren das Aussetzen der Membran einer Kraft enthält, die der gewünschten Vorlastkraft entspricht, so daß die Membran axial auf dem Körperende verschoben wird und daß dann die Membran in der Position, in die sie verschoben worden ist, mit dem Körperende verschweißt wird.

*Fig.1.*

*Fig.2.*

Fig.3

Fig.4.

19

*Fig.5.*

*Fig. 6.*

56ᵈ  28ᵈ  54ᵈ

32ᵈ

12ᵈ

42ᵈ  36ᵈ

34ᵈ

24ᵈ  40ᵈ

38ᵈ

48.2ᵈ  48ᵈ

46.2ᵈ

46ᵈ

26ᵈ  44ᵈ

46.1ᵈ  44.2ᵈ

## Fig. 7.

54ᵉ  28ᵉ  56ᵉ

32ᵉ

12ᵉ

36ᵉ  34ᵉ

42ᵉ  40ᵉ

24ᵉ

38ᵉ  68ᵉ·

48ᵉ  46.4ᵉ

68.1ᵉ  46ᵉ

46.1ᵉ

44.6ᵉ  44.5ᵉ

46.3ᵉ  44.2ᵉ  44ᵉ

## Fig. 8.